# EUROPÄISCHE PATENTSCHRIFT

(11) **EP 1 495 611 B1**
(45) Veröffentlichungstag und Bekanntmachung des Hinweises auf die Patenterteilung: **18.06.2014**
(21) Anmeldenummer: 02732393.0
(22) Anmeldetag: 12.04.2002
(51) Int. Cl.: H04L 29/06, G06F 17/30

(54) **REPRÄSENTATION BOOL'SCHER AUSDRÜCKE ZUR SPEZIFIKATION VON FILTERN MITTELS XML**
REPRESENTATION OF BOOLEAN EXPRESSIONS FOR SPECIFYING FILTERS USING XML
REPRESENTATION D'EXPRESSIONS BOOLEENNES POUR LA SPECIFICATION DE FILTRES PAR XML

(43) Veröffentlichungstag der Anmeldung: 12.01.2005
(73) Patentinhaber: Siemens Aktiengesellschaft, 80333 München (DE)
(72) Erfinder: MAYER, Georg, 83714 Miesbach (DE); OBERMAIER, Richard, 81379 München (DE); STRAULINO, Heiko, 82152 Planegg-Martinsried (DE)
(86) Internationale Anmeldenummer: PCT/DE2002/001382
(87) Internationale Veröffentlichungsnummer: WO 2003/088611

(56) Entgegenhaltungen:
- EP-A- 1 043 657
- WO-A-01/78358
- DE-A- 10 046 345
- DE-A- 10 048 940
- BRAY T. ET ALL: "Extensible Markup Language (XM) 1.0 (Second Edition)" 6. Oktober 2000 (2000-10-06) , W3C , WORLD WIDE WEB CONSORTIUM XP002220864 Seite 11, Zeile 30 -Seite 15, Zeile 13

## Beschreibung

Die Erfindung betrifft Verfahren und Vorrichtungen zur Bewerkstelligung von Veranlassungen innerhalb eines Mobilfunknetzes mit Merkmalen insbesondere gemäß dem Anspruch 1 beziehungsweise 16.

Das Dokument DE 100 48 940 A1 beschreibt das Erzeugen von Dokumenteninhalten durch Transcodierung des Ausgabe-Datenstroms eines Anwendungsservers mit Hilfe von Java Server Pages.

Moderne Mobilfunknetze sind dem Fachmann beispielsweise aus der Internetseite http://www.3GPP.org (betreffend Spezifikationen für UMTS-Mobilfunknetze) bekannt.

Aufgabe der vorliegenden Erfindung ist es, innerhalb eines Mobilfunknetzes die Bewerkstelligung von Veranlassungen möglichst einfach und effizient durch Auswertung und Filtern von im Mobilfunknetz übermittelten Nachrichten (insbesondere Steuerungsnachrichten wie SIP-Nachrichten) zu ermöglichen. Die Aufgabe wird jeweils durch die Gegenstände der unabhängigen Ansprüche gelöst.

Durch Verwendung eines Dokumentes in einer Internet-Seitenbeschreibungssprache, wie insbesondere XML, in welcher Filterbedingungen (beispielsweise: An wen soll die SIP-Nachricht gehen?, Von wem stammt die SIP-Nachricht?, Enthält die SIP-Nachricht einen Header?, Ist diese Nachricht ein Videositzungsaufbau?, Sind bestimmte Zeichenfolgen im Header enthalten? usw.) und logische Verknüpfungen der Filterbedingungen (z. B. UND-Verknüpfungen: liegt sowohl Filterbedingung 1 wie auch Filterbedingung 2 vor; also Bool'sche-Verknüpfungen)definiert werden, ist eine einfache und effiziente Auswertung von in einem Verbindungssteuerungselement

(S-CSCF oder anderes Steuerungs- oder Vermittlungselement eines Telekommunikationsnetzes) eingehenden Nachrichten durch Filterung möglich. Die Verwendung eines Dokumentes in einer Internet-Seitenbeschreibungssprache (wie XML) hat den Vorteil, einfach lesbar und programmierbar und gegebenenfalls änderbar (für eine Veränderung von Filterbedingungen) zu sein. Überdies gibt es bereits eine Vielzahl von unterstützenden Software-Werkzeugen (Tools, wie Parser etc.). Die einfache Änderungs- und Darstellungsmöglichkeit ist insbesondere für die große Vielzahl von Nutzern eines Telekommunikationsnetzes geeignet; für jeden Benutzer können in einem Benutzerprofil etc. (in einem Heimatregister oder in S-CSCF) die Filterbedingungen und deren logische Verknüpfungen als XML-Dokument gespeichert werden. In der Abhängigkeit vom Ergebnis der Filterung (= zu suchende Textelemente sind in der eingehenden Nachricht enthalten oder (wenn vorgeschrieben) nicht enthalten, die logischen Verknüpfungen sind zutreffend oder nicht) kann eine Weiterleitung der Nachricht an den Nutzer des Telekommunikationsnetzes und/oder das Starten einer oder mehrerer Applikationen veranlasst werden. Eine Applikation kann beispielsweise die Unterstützung des Aufbaus eines chats mit in der Nachricht angegebenen Parametern (betreffend chat-Teilnehmer = Absender und Empfänger der Nachricht u.a. etc.) sein.

Die Nachricht kann insbesondere eine Session Initiation Protocol-Nachricht (SIP-Message) sein oder eine andere Form aufweisen und durch einen Filter zu filternde Bedingungen als Textelemente (alphanumerische Zeichenfolgen etc.) enthalten.

Die logische Verknüpfung von Filterbedingungen kann beispielsweise sein, dass zwei Filterbedingungen vorliegen (z.B. erste Filterbedingung: Header enthält bestimmte Zeichenfolgen; zweite Filterbedingung: Nachricht ist an einen bestimmten Teilnehmer gerichtet) oder dass eine der beiden Filterbedingungen zutrifft oder dass eine Filterbedingung zutrifft und die andere nicht zutrifft. Eine logische Verknüpfung kann auch mehr als zwei Filterbedingungen verknüpfen. Im Einzelfall ist es möglich, dass der Text nur einer Filterbedingung enthält. Der Vergleich von Textelementen in einer eingegangenen Nachricht mit Textelementen im (den Filtern definierenden) Internet-Seitenbeschreibungssprache-Dokument kann beispielsweise durch zeichenweisen Textvergleich (Vergleich der einzelnen Zeichen eines Textes unter Berücksichtigung, wo diese Zeichen sind) von in Textelementen enthaltenen alphanumerischen Zeichen erfolgen.

Weitere Merkmale und Vorteile der Erfindung ergeben sich aus der nachfolgenden Beschreibung eines Ausführungsbeispieles anhand der Zeichnung. Dabei zeigt:
- Figur 1: als Blockschaltbild die Filterung einer von einem ersten Teilnehmer eines Telekommunikationsnetzes an einen zweiten Teilnehmer eines Telekommunikationsnetzes abgesandten SIP-Nachricht,
- Figur 2: ein Beispiel einer SIP-Nachricht,
- Figur 3: die Definition von XML-tags für die Definition von Filterbedingungen in einem XML-Dokument-Filter,
- Figur 4: beispielhaft logische Verknüpfungen von einzelnen Filterbedingungen,
- Figur 5: die Definition des Formats eines einen Filter definierenden Dokumentes als XML-DTD,
- Figur 6: beispielhaft einen Filterausdruck im Klartext,
- Figur 7: ein Dokument mit einer XML-Darstellung des in Figur 6 als Klartext dargestellten Filters.

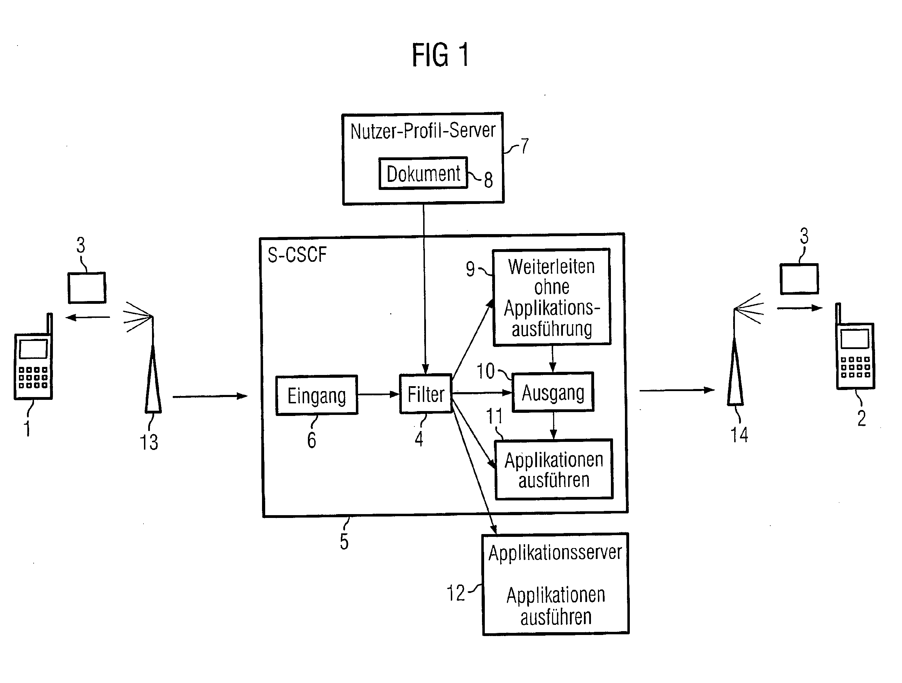

Figur 1 zeigt eine von einem ersten Teilnehmer 1 eines Telekommunikationsnetzes an einen zweiten Teilnehmer 2 eines Telekommunikationsnetzes (über durch eine Basisstation 13 bzw. 14 schematisch angedeutetes Mobilfunknetz und/oder ein weiteres Telekommunikationsnetz) gesandte SIP-Nachricht 3, welche von einem Verbindungselement S-CSCF der Applikationsarchitektur eines IP- based Multimedia Subsystems (UMTS-IMS) durch erfindungsgemäße Filterung dahingehend ausgewertet wird, welche Applikationen auszuführen sind oder ob und wohin die SIP-Nachricht 3 weiterzuleiten ist. Die Filterbedingungen (woher kommt die Nachricht, veranlasst sie den Aufbau einer Videosession etc.), die logischen Verknüpfungen von Filterbedingungen (trifft Filterbedingung 1 zu und Filterbedingung 2 ebenfalls etc). und die Festlegung, was im Falle des Zutreffens der Filterbedingungen und ihrer logischen Verknüpfungen in der Nachricht zu veranlassen ist (beispielsweise welche Applikationen auszuführen sind) sind Bestandteil eines Benutzerprofils (IMS-CSCF oder HLA etc.) eines Teilnehmers (beispielsweise des Teilnehmers 2, an welchen die Nachricht gesandt wird oder des Teilnehmers 1, der die Nachricht absendet).

Bei positivem Filterergebnis (Filterbedingungen und logische Verknüpfungen wurden vom S-CSCF als zutreffend erachtet) kann die SIP-Nachricht beispielsweise an einen (eventuell im Benutzerprofil mit Adresse angegebenen) Applikationsserver weitergeleitet werden.

Durch eine SIP-Nachricht veranlassbare Applikationen oder Verbindungsaufbau-bezogene Vorgänge können beispielsweise aufzubauende oder zu ändernde Sprachverbindungen, Videoverbindungen, Chats etc. sein. Eine SIP-Nachricht ist allgemein eine textbasierte Nachricht, durch welche insbesondere verbindungsaufbau-steuernde Applikationen für Sitzungen (Session) zwischen Nutzern eines UMTS-IMS gesteuert werden können.

Eine Filtereinrichtung 4 in dem Verbindungssteuerungselement (IMS-CSCF) 5 kann nach Eingehen einer SIP-Nachricht 3 in einem schematisch angedeuteten Eingang 6 (Interface) des Verbindungssteuerungselements S-CSCF 5 aus einer Nutzerprofil-Datenbank 7 des Teilnehmers von dem die Nachricht stammt oder (wie hier) an den die Nachricht gerichtet ist (Teilnehmer 2) ein einen Filter definierendes Dokument 8 in den Filter 4 der S-CSCF 5 herunterladen. Im Filter 4 folgt eine Überprüfung, ob die einzelnen Filterbedingungen (Vorliegen von vorgegebenen Textelementen) und deren Verknüpfung (beispielsweise 2 oder mehr Filterbedingungen sollen gleichzeitig zutreffen) in der Nachricht gemäß Filter-Vorgaben im Dokument 8 für den von der Nachricht betroffenen Nutzer (2) zutreffen. In Abhängigkeit vom Ergebnis der Überprüfung im Filter 4 kann ein Weiterleiten (9) an den B-Teilnehmer 2 ohne Ausführen einer Applikation erfolgen (wenn einzelne Filterbedingungen oder Verknüpfungen nicht zutreffen) oder (wenn die einzelnen Filterbedingungen zutreffen und die logischen Verknüpfungen zutreffen) je nach Inhalt der Nachricht und Vorgaben im Nutzerprofil für den Nutzer 2 (und/oder 1) ein Weiterleiten 10 der Nachricht 3 (an den Nutzer 2) und/oder ein Veranlassen oder Ausführen von Applikationen 11 (im S-CSCF 5 und/oder in einem Applikationsserver 12) erfolgen.

In modernen Mobilfunknetzen (wie beispielsweise UMTS-Mobilfunknetzen) wird das Session Initiation Protocoll (SIP) zur Initiierung interaktiver Kommunikations-Sitzungen (Sessions, z.B. Sprach-Sessions, Video-Sessions, Chat-Sessions, Interactive Games) zwischen Nutzern des Mobilfunktelekommunikationsnetzes verwendet.

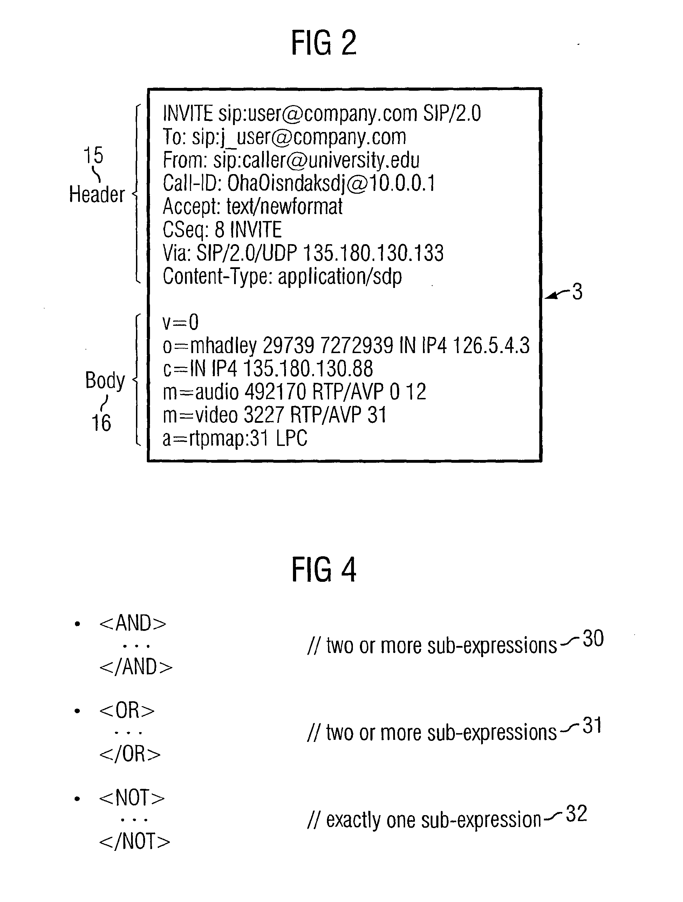

Figur 2 zeigt beispielhaft eine SIP-Nachricht, welche aus einem sogenannten Header(Kopf) mit beispielsweise Herkunftsangaben (von welchem Nutzer Caller@university.edu kommend oder an wen Nutzer j_user@company.com gerichtet) zu Herkunft und Ziel der Nachricht enthält. Informationen betreffend z.B. die Richtung (beispielsweise mobileoriginated oder mobileterminated oder mobileterminating für einen nicht registrierten Benutzer etc.) können aus z.B. internen Zustandsinformationen der S-CSCF (5) gewonnen werden. Neben dem (fakulatativen) Header 15 enthält eine Nachricht evtl. auch einen Body (Körper) 16, der beispielsweise angibt, ob eine Videositzung (M = Video), eine Chat-Sitzung etc. aufgebaut oder modifiziert werden soll.

Da eine SIP-Nachricht als Text-basierte (alphanumerische, Text und/oder Zahlen enthaltene) Nachricht aufgebaut ist können Vergleiche bezüglich einzelner Filterbedingungen (Text in der Nachricht und im Dokument 8 enthalten) als einfacher Mustervergleich mittels regulärer Ausdrücke durchgeführt werden. Es kann beispielsweise möglich sein folgende Eigenschaften (Filterbedingungen einer SIP-Nachricht 3 sowie logische Verknüpfungen hiervon) zu filtern:
- Typ (SIP-Methode) oder SIP-Nachricht
- Vorhanden sein oder Abwesenheit eines Headers in der SIP-Nachricht
- Wert eines Headers in der SIP-Nachricht
- Richtung der SIP-Nachricht (Mobileoriginating, Mobileterminating, Mobileterminating für einen nicht registrierten Benutzer)
- Session Beschreibung (Session Description Information).

Zur einfachen und effizienten Ausführung der Filterung ist erfindungsgemäß der Filter als (in der Nutzerprofidatenbank 7 gespeichertes) XML-Dokument 8 implementiert, welches im Filter 4 abgearbeitet wird und anhand der Zeichnungen 3 bis 7 im folgenden erläutert wird.

Die Verwendung der Sprache XML hat den Vorteil, dass es sich um eine universelle, austauschbare (d.h. von unterschiedlichen Rechenarchitekturen verarbeitbare und einfach von Menschen lesbare) Beschreibungssprache handelt, für die es bereits eine Vielzahl von tools gibt und die sich leicht einsetzen lässt.

Ein Filter ist im Prinzip eine bool'sche Verknüpfung von einzelnen Filterbedingungen. Ein Filter kann im einfachsten Fall nur eine einzige Filterbedingung enthalten oder (rekursiv) aus Konjunktion, Disjunktion oder Negation von mehreren Filterbedingungen gebildet sein.

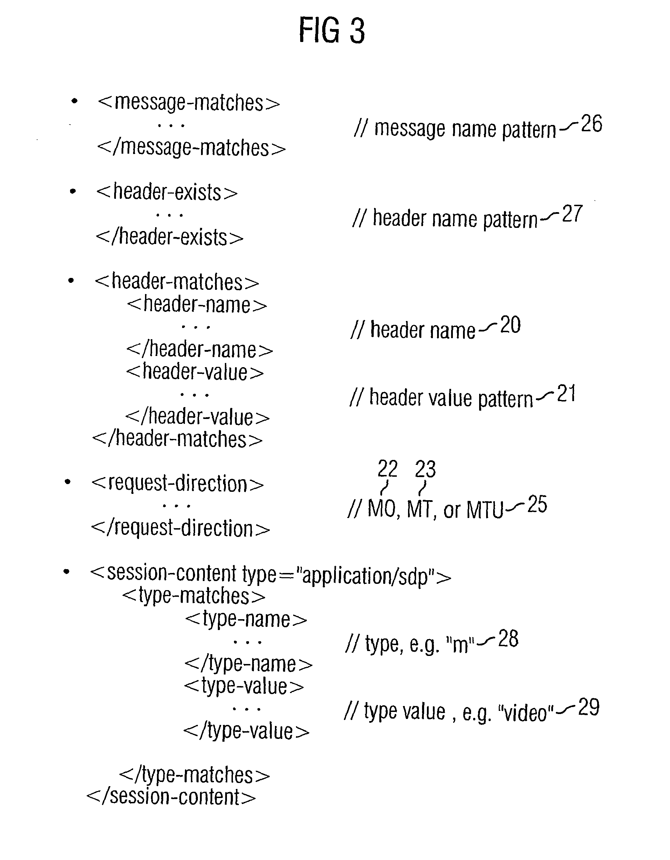

Die genannten einfachen Filterbedingungen werden im folgenden anhand Figur 3 beschrieben durch spezielle XML-Tags repräsentiert. Eine einzelne Filterbedingung wird mit Hilfe eines XML-Tags "Trigger" wie folgt beschrieben:
[Trigger]
...//boolean expression
[/Trigger].

Weiterhin werden die in Figur 3 gezeigten XML-Tags definiert, die beispielhaft einige Filterbedingungen beschreiben.

Die unter dem ersten Punkt aufgeführte Filterbedingung definiert die Abfrage, ob ein vorgegebenes Muster (message name pattern) in der Nachricht enthalten ist. Die unter dem zweiten Punkt aufgeführte XML-Tags (Header name pattern) definiert, ob ein Muster im Header der Nachricht enthalten ist. Die unter dem dritten aufgeführte Filterbedingung (Header matches) überprüft, ob Name des Headers und ein Muster im Header in der Nachricht als Textelement (alphanumerische Zeichenfolge) enthalten ist. Die vierte Filterbedingung (request-direction) dient der Überprüfung, ob die Nachricht Mobileoriginating (MO), Mobileterminating (MT) oder (MTU) (Mobileterminated zu unbekannten Benutzer) ist. Die unter dem fünften Punkt aufgeführte Filterbedingung betrifft die Abfrage nach dem Session Content Type- also ob beispielsweise durch die Nachricht eine "Video" Session gestartet etc. werden soll. An den Stellen in Figur 3, an welchen "Pattern" (Muster) angegeben ist, kann jeweils ein Text-Ausdruck eingesetzt werden wie beispielsweise eine Adresse "pre-paid@operator.com" etc.

Eine (eventuell rekursiv geschachtelte) Verknüpfung von Teilausdrücken (Filterbedingungen) durch bool'sche Operatoren and/or/not (=logische Verknüpfung) wird mittels der drei in Figur 4 gezeigten XML-tags erzielt. Dabei kann eine Sub-Expression (Teilausdruck) entweder eine einfache Bedingung sein oder -rekursiv definiert - wiederum eine Verknüpfung von Teilausdrücken durch die genannten bool'schen Operatoren.

Ein Grundprinzip der Erfindung liegt somit in der Definition der einfachen Filterbedingungen zum Filtern von SIP-Nachrichten, ihrer Verknüpfung zu einem bool'schen Ausdruck sowie dem Umsetzen der Struktur eines derartigen bool'schen Ausdruck in die Struktur eines XML-Dokumentes. Das Verfahren ist beispielsweise im Rahmen eines IP-Multimedia-Subsystems für 3GGP verwendbar. Es kann beispielsweise Bestandteil eines UMTS-R5- konformen S-CSCF (Serving Call State Control Function) sein.

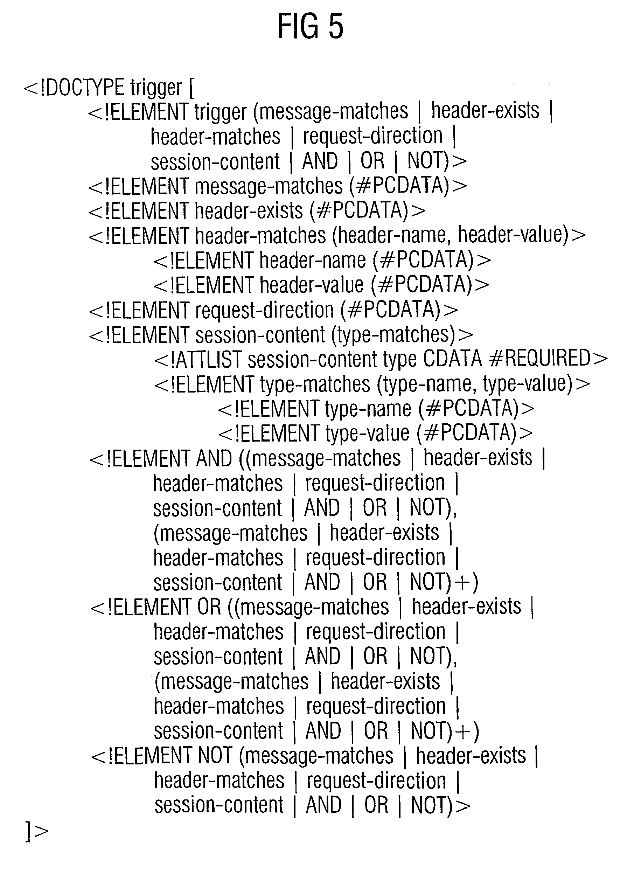

Figur 5 zeigt beispielhaft wie in der XML-Sprache mittels einer DTD (Dokumenttypedefinition) das Format der als Filter zu verwendenden Dokumente beschrieben werden kann, damit sie ein gültiges Dokument beschreiben.

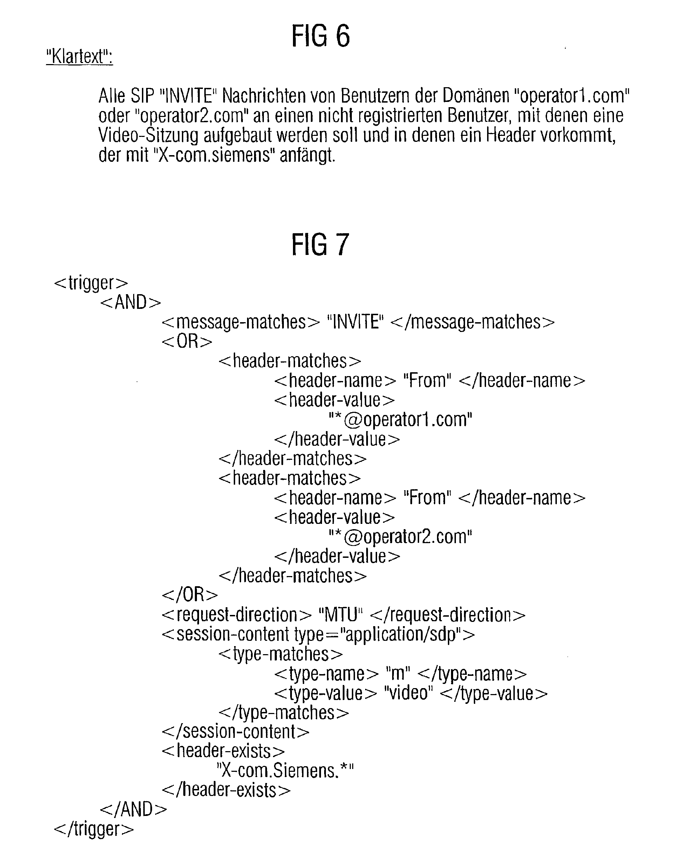

Figur 6 zeigt im Klartext, also als Anweisung in einer für Menschen gebräuchlichen Sprache, ein Beispiel eines Filters, der als Dokument (XML) definiert werden soll.

Figur 7 zeigt die Umsetzung des in Figur 6 definierten Filters in ein XML- Dokument. Neben der Verwendung von XML ist auch die Verwendung von anderen Internet-Seitenbeschreibungssprachen, die bereits oder in der Zukunft entwickelt werden, denkbar.

## Patentansprüche

1. Verfahren zur Festlegung von Veranlassungen anhand vorgegebener Filterbedingungen, die auf bei einem Verbindungssteuerungselement (5) eines Mobilfunknetzes (13, 14, 5) eingehenden Nachrichten (3) angewendet werden, mit Verfahrensschritten, bei denen die eingehenden Nachrichten (3) anhand der Filterbedingungen ausgewertet und gefiltert und in Abhängigkeit vom Ergebnis der Filterung eine mögliche Weiterleitung der Nachricht an einen Nutzer (2) des Mobilfunknetzes (13, 14, 5) und/oder ein mögliches Starten einer oder mehrerer Applikationen veranlasst werden, wobei
das Filtern (4) erfolgt
- durch Vergleich (4) von Textelementen (20 bis 29) in einem für das Verbindungssteuerungselement (5) zugreifbaren, die Filterbedingungen als Textelemente (20 bis 29) enthaltenden, die Filterbedingungen und logische Verknüpfungen von Filterbedingüngen repräsentierenden Dokument (8) mit Textelementen (20 bis 29) in einer eingegangenen (6) Nachricht (3) oder mit von dem Verbindungssteuerungselement (5) bestimmten Zustandsinformationen und
- durch Überprüfen (4), ob im Dokument (8) ferner in einer Internet-Seitenbeschreibungssprache (XML) festgelegte logische Verknüpfungen (30 bis 32) von Filterbedingungen (20 bis 29) für die Nachricht (3) zutreffen.

2. Verfahren nach Anspruch 1,
**dadurch gekennzeichnet,**
**dass** Textelemente (20 bis 29) alphanumerische Zeichen enthalten.

3. Verfahren nach einem der vorhergehenden Ansprüche,
**dadurch gekennzeichnet ,**
**dass** das Verbindungssteuerungselement (5) eine Vermittlungseinrichtung oder Signalisierungseinrichtung, insbesondere CSCF, eines Mobilfunknetzes ist.

4. Verfahren nach einem der vorhergehenden Ansprüche,
**dadurch gekennzeichnet ,**
**dass** die Internet-Seitenbeschreibungssprache XML ist.

5. Verfahren nach einem der vorhergehenden Ansprüche,
**dadurch gekennzeichnet,**
**dass** die Nachricht (3) eine Session-Initiation-Protocol-Nachricht ist.

6. Verfahren nach einem der vorhergehenden Ansprüche,
**dadurch gekennzeichnet,**
**dass** die Filterbedingungen im Dokument als XML-Tags definiert sind.

7. Verfahren nach einem der vorhergehenden Ansprüche,
**dadurch gekennzeichnet,**
**dass** eine Verknüpfung (30, 31, 32) von Filterbedingungen durch zumindest eine der bool'schen Verknüpfungen and/or/not definiert ist.

8. Verfahren nach einem der vorhergehenden Ansprüche,
**dadurch gekennzeichnet,**
**dass** die Filterbedingungen in einem Dokument als XML-DTD definiert werden.

9. Verfahren nach einem der vorhergehenden Ansprüche,
**dadurch gekennzeichnet,**
**dass** eine Filterbedingung ist, ob die Nachricht von einem bestimmten Benutzer eines Telekommunikationsnetzes stammt.

10. Verfahren nach einem der vorhergehenden Ansprüche,
**dadurch gekennzeichnet,**
**dass** eine Filterbedingung ist, ob der Header oder Body einer Nachricht ein im Dokument angegebenes Textelement enthält.

11. Verfahren nach einem der vorhergehenden Ansprüche,
**dadurch gekennzeichnet,**
**dass** eine Filterbedingung ist, in welche Richtung die Nachricht gerichtet ist.

12. Verfahren nach einem der vorhergehenden Ansprüche;
**dadurch gekennzeichnet,**
**dass** bei positivem Filterergebnis eine im Dokument als Text angegebene Applikation gestartet wird.

13. Verfahren nach einem der vorhergehenden Ansprüche,
**dadurch gekennzeichnet,**
**dass** durch die Nachricht Applikationen nur ausgeführt werden und/oder die Nachricht nur an einen Nutzer an den sie gerichtet ist weitergeleitet wird, falls die Filterbedingungen und Verknüpfungen zutreffen.

14. Verfahren nach einem der vorhergehenden Ansprüche,
**dadurch gekennzeichnet,**
**dass** aufgrund des Ergebnisses des Filterns entschieden wird, welche Applikation gestartet werden soll.

15. Verfahren nach einem der vorhergehenden Ansprüche,
**dadurch gekennzeichnet,**
**dass** für einen Nutzer des Telekommunikationsnetzes mindestens ein Dokument in einer Profil-Datei gespeichert ist.

16. Verbindungssteuerungselement (5) für eine Anwendung in einem Verfahren nach einem der vorhergehenden Ansprüche, mit
- einem Eingang (6) für eingehende Nachrichten (3),
- einem Speicher oder Zugriff auf einen Speicher (7) für ein in einer Internet-Seitenbeschreibungssprache definiertes Dokument (8), das Filterbedingungen (20 bis 29) und logische Verknüpfungen (30 bis 32) von Filterbedingungen repräsentiert,
- einer Filtereinrichtung (4) zum Filtern von am Eingang eingehenden Nachrichten (3) unter Verwendung eines in einem Speicher (7) gespeicherten Dokumentes (8),
- einem Ausgang (40) zum Absenden von Nachrichten oder Mitteilen von Nachrichten an einen Nutzer (2) an den die Nachricht gerichtet ist und/oder an Einrichtungen (11) zum Ausführen von durch die Nachricht angegebenen Applikationen.

## Claims

1. Method for specifying initiations on the basis of predetermined filtering conditions which are applied to incoming messages (3) in the case of a connection controlling element (5) of a mobile radio network (13, 14, 5), with method steps in which the incoming messages (3) are evaluated and filtered on the basis of the filtering conditions and as a function of the result of the filtering a possible forwarding of the message to a user (2) of the mobile radio network (13, 14, 5) and/or a possible starting of one or more applications are initiated, wherein
the filtering (4) is carried out
- by comparison (4) of text elements (20 to 29) in a document (8) which is accessible for the connection controlling element (5), which contains the filtering conditions as text elements (20 to 29) and which represents the filtering conditions and logical linkages of filtering conditions, with text elements (20 to 29) in an incoming (6) message (3) or with status information determined by the connection controlling element (5) and
- and by checking (4) whether logical linkages (30 to 32) of filtering conditions (20 to 29) further specified in the document (8) in an internet page description language (XML) apply to the message (3).

2. Method according to claim 1,
**characterised in that**
text elements (20 to 29) contain alphanumeric characters.

3. Method according to one of the preceding claims,
**characterised in that**
the connection controlling element (5) is a switching facility or signalling facility, in particular CSCF, of a mobile radio network.

4. Method according to one of the preceding claims,
**characterised in that**
the internet page description language is XML.

5. Method according to one of the preceding claims,
**characterised in that**
the message (3) is a Session Initiation Protocol message.

6. Method according to one of the preceding claims,
**characterised in that**
the filtering conditions are defined in the document as XML tags.

7. Method according to one of the preceding claims,
**characterised in that**
a linkage (30, 31, 32) of filtering conditions is defined by at least one of the Boolean operators and/or/not.

8. Method according to one of the preceding claims,
**characterised in that**
the filtering conditions are defined in a document as XML-DTD.

9. Method according to one of the preceding claims,
**characterised in that**
a filtering condition is whether the message originates from a particular user of a telecommunication network.

10. Method according to one of the preceding claims,
**characterised in that**
a filtering condition is whether the header or body of a message contains a text element specified in the document.

11. Method according to one of the preceding claims,
**characterised in that**
a filtering condition is the direction in which the message is directed.

12. Method according to one of the preceding claims,
**characterised in that**
in the case of a positive filtering result an application specified as text in the document is started.

13. Method according to one of the preceding claims,
**characterised in that**
applications are only executed and/or the message is routed only to a user to whom it is directed by the message if the filtering conditions and linkages apply.

14. Method according to one of the preceding claims,
**characterised in that**
on the basis of the result of filtering a decision is taken as to which application is to be started.

15. Method according to one of the preceding claims,
**characterised in that**
at least one document is stored for a user of the telecommunication network in a profile file.

16. Connection controlling element (5) for an application in a method according to one of the preceding claims, having
- an input (6) for incoming messages (3),
- a memory or access to a memory (7) for a document (8) defined in an internet page description language, which represents filtering conditions (20 to 29) and logical linkages (30 to 32) of filtering conditions,
- a filtering facility (4) for filtering incoming messages (3) at the input using a document (8) stored in a memory (7),
- an output (40) for sending messages or notifying messages to a user (2) to whom the message is directed and/or to facilities (11) for executing applications specified by the message.

## Revendications

1. Procédé pour déterminer des ordres sur la base de conditions de filtrage prédéfinies qui sont appliquées à des messages (3) entrant au niveau d'un élément de commande de communication (5) d'un réseau de radiotéléphonie mobile (13, 14, 5), comprenant des étapes de procédé dans lesquelles les messages entrant (3) sont analysés et filtrés sur la base des conditions de filtrage et, en fonction du résultat du filtrage, l'ordre d'une éventuelle transmission du message à un utilisateur (2) du réseau de radiotéléphonie mobile (13, 14, 5) et/ou d'un éventuel lancement d'une ou de plusieurs applications est donné,
le filtrage (4) s'effectuant
- en comparant (4) des éléments de texte (20 à 29) dans un document (8) auquel l'élément de commande de communication (5) peut accéder, qui contient les conditions de filtrage sous forme d'éléments de texte (20 à 29) et qui représente les conditions de filtrage et opérateurs logiques de conditions de filtrage avec des éléments de texte (20 à 29) dans un message (3) arrivé (6) ou avec des informations d'état déterminées par l'élément de commande de communication (5) et
- en vérifiant (4) si, dans le document (8), en outre, des opérateurs logiques (30 à 32) de conditions de filtrage (20 à 29) spécifiés dans un langage de description de page Internet (XML) s'appliquent au message (3).

2. Procédé selon la revendication 1, **caractérisé en ce que** les éléments de texte (20 à 29) contiennent des caractères alphanumériques.

3. Procédé selon l'une des revendications précédentes, **caractérisé en ce que** l'élément de commande de communication (5) est un dispositif de commutation ou dispositif de signalisation, notamment CSCF, d'un réseau de radiotéléphonie mobile.

4. Procédé selon l'une des revendications précédentes, **caractérisé en ce que** le langage de description de page Internet est XML.

5. Procédé selon l'une des revendications précédentes, **caractérisé en ce que** le message (3) est un message de protocole d'initiation de session.

6. Procédé selon l'une des revendications précédentes, **caractérisé en ce que** les conditions de filtrage sont définies dans le document en tant que balises XML.

7. Procédé selon l'une des revendications précédentes, **caractérisé en ce qu'**un opérateur (30, 31, 32) de conditions de filtrage est défini par au moins un des opérateurs booléens et/ou/non.

8. Procédé selon l'une des revendications précédentes, **caractérisé en ce que** les conditions de filtrage sont définies dans un document en tant que XML-DTD.

9. Procédé selon l'une des revendications précédentes, **caractérisé en ce qu'**une condition de filtrage consiste à savoir si le message provient d'un utilisateur déterminé d'un réseau de télécommunications.

10. Procédé selon l'une des revendications précédentes, **caractérisé en ce qu'**une condition de filtrage consiste à savoir si l'en-tête ou le corps d'un message contient un élément de texte indiqué dans le document.

11. Procédé selon l'une des revendications précédentes, **caractérisé en ce qu'**une condition de filtrage consiste à savoir dans quelle direction le message est adressé.

12. Procédé selon l'une des revendications précédentes, **caractérisé en ce qu'**en cas de résultat de filtrage positif, une application indiquée en tant que texte dans le document est lancée.

13. Procédé selon l'une des revendications précédentes, **caractérisé en ce que** des applications ne sont exécutées suite au message et/ou le message n'est transmis à un utilisateur auquel il est adressé que si les conditions de filtrage et les opérateurs concordent.

14. Procédé selon l'une des revendications précédentes, **caractérisé en ce qu'**il est décidé, sur la base du résultat du filtrage, quelle application doit être lancée.

15. Procédé selon l'une des revendications précédentes, **caractérisé en ce que**, pour un utilisateur du réseau de télécommunications, au moins un document est enregistré dans un fichier de profils.

16. Élément de commande de communication (5) destiné à être utilisé dans un procédé selon l'une des revendications précédentes, comprenant
- une entrée (6) pour des messages (3) entrant,
- une mémoire ou un accès à une mémoire (7) pour un document (8) défini dans un langage de description de page Internet qui représente des conditions de filtrage (20 à 29) et des opérateurs logiques (30 à 32) de conditions de filtrage,
- un dispositif de filtrage (4) permettant de filtrer des messages (3) entrant au niveau de l'entrée en utilisant un document (8) enregistré dans une mémoire (7),
- une sortie (40) permettant d'envoyer des messages ou de transférer des messages à un utilisateur (2) auquel le message est adressé et/ou à des dispositifs (11) permettant d'exécuter des applications indiquées au moyen du message.
